# EUROPEAN PATENT APPLICATION

(11) **EP 4 460 100 A1**
(43) Date of publication of application: **06.11.2024**
(21) Application number: 22925121.0
(22) Date of filing: 15.12.2022
(51) Int. Cl.: H04W 48/16, H04W 56/00, H04W 88/06, H04B 1/401

(54) **ELECTRONIC DEVICE FOR SEARCHING FOR BASE STATION, AND ELECTRONIC DEVICE OPERATING METHOD**

(30) Priority: 03.02.2022 KR 20220014278; 17.02.2022 KR 20220020684
(71) Applicant: SAMSUNG ELECTRONICS CO., LTD., Yeongtong-gu Suwon-si, Gyeonggi-do 16677 (KR)
(72) Inventor: LEE, Youngkwon, Suwon-si, Gyeonggi-do 16677 (KR); YU, Hyungjoon, Suwon-si, Gyeonggi-do 16677 (KR); LEE, Sanghyun, Suwon-si, Gyeonggi-do 16677 (KR)
(74) Representative: Nederlandsch Octrooibureau
(86) International application number: PCT/KR2022/020478
(87) International publication number: WO 2023/149654

(57) **Abstract**

In an electronic device and an electronic device operating method, according to various embodiments, the electronic device comprises: a communication processor; a digitally compensated crystal oscillator (DCXO) generating a reference clock for generating a signal having a reference frequency; and a transceiver for supporting auto frequency control (AFC) performed so that the signal has a frequency of designated range, wherein the communication processor can be configured to: change the frequency of the signal in the designated range so that the transceiver is controlled so as to search for a base station included in a network to which the electronic device is to be connected; enter, on the basis of a failure of the search for the base station, a mode for changing the designated range; change the size of the designated range; and search for the base station again on the basis of a signal having a frequency of the changed range. Other various embodiments are possible.

## Description

### [Technical Field]

Various embodiments of the disclosure relate to an electronic device and method for operating the electronic device, and to an electronic device that switches connected cellular communication or an operation mode of cellular communication based on the state of the electronic device.

### [Background Art]

To meet the demand for wireless data traffic having increased since 4^{th} generation (4G) communication systems are commercialized, efforts have been made to develop an improved 5^{th} generation (5G) or pre-5G communication system. Therefore, the 5G or pre-5G communication system is also called a `Beyond 4G Network' communication system or a `Post Long Term Evolution (LTE) system'. The 5G communication system is considered to be implemented in higher frequency (mmWave) bands (e.g., 6GHz or higher bands) in addition to the bands (6GHz or lower bands) that has been used by LTE, so as to accomplish higher data rates. Further, the beamforming, massive multiple-input multiple-output (MIMO), full dimensional MIMO (FD-MIMO), array antenna, an analog beam forming, large scale antenna techniques are discussed in 5G communication systems.

The electronic device may first search for a base station in order to transmit or receive data through wireless communication. The electronic device may perform frequency synchronization with respect to the frequency of a reference signal that is used for converting the frequency of the signal broadcasted by the base station and signal broadcasted by the base station to a baseband signal.

### [Disclosure of Invention]

### [Technical Problem]

For frequency synchronization, the electronic device may identify the frequency of the signal broadcasted by the base station while changing the frequency of the reference signal that is used in the operation of changing the signal broadcast by the base station to the baseband signal within a predetermined range using automatic frequency control (AFC).

However, due to problems with the digitally compensated crystal oscillator (DCXO), the frequency of the reference signal may be different from the intended frequency. For example, in case that an error occurs in the control of a communication processor, the DCXO generates a clock that is different from a reference clock for generating the reference frequency, so a transceiver designed to generate the reference signal based on the DCXO's reference clock may generate a signal with a frequency different from the intended frequency. Furthermore, due to the aging phenomenon of various components included in the DCXO (e.g., crystal or elements connected to the crystal), a situation may occur in which the clock transmitted to the transceiver is different from the reference clock.

The situations described above can have a significant impact on an electronic device not being able to successfully search for the base station.

### [Solution to Problem]

An electronic device according to various embodiment of the disclosure comprises a communication processor; a digitally compensated crystal oscillator (DCXO) that generates a reference clock for generating a signal having a reference frequency; and a transceiver that supports auto frequency control (AFC) performed to control the signal to have a frequency of designated range, wherein the communication processor is configured to control the transceiver to search for a base station included in a network to which the electronic device is to be connected by changing the frequency of the signal within the designated range, enter, on the basis of a failure of the search for the base station, a mode for changing the designated range, change a size of the designated range, and search for the base station again on the basis of a signal having a frequency of the changed range.

A method for operating an electronic device according to various embodiment of the disclosure may comprise controlling a transceiver, which supports auto frequency control (AFC) performed to change a frequency of a signal within a designated range, to search for a base station included in a network to which an electronic device is to be connected by having the transceiver change the frequency of the signal within the designated range, in order to search for the base station included in the network to which the electronic device is to be connected; entering, on the basis of a failure of the search for the base station, a mode for changing the designated range; changing a size of the designated range; and searching for the base station again on the basis of a signal having a frequency of the changed range.

### [Advantageous Effects of Invention]

An electronic device and operating method of the electronic device according to various embodiments of the disclosure may enter a mode for changing the designated range of the frequency of a reference signal in case of a failure of the search for a base station, change the designated range of the frequency of the reference signal, and search for the base station using the reference signal having the frequency of the changed range. Accordingly, the electronic device can prevent base station search failure caused by a defective DCXO by performing base station search using a relatively wider range of frequency bands.

An electronic device and operating method of the electronic device according to various embodiments of the disclosure may configure a designated range differently on the basis of the number of times a mode for changing the designated range of the frequency of the reference signal is entered in case of a failure of the search for a base station. Therefore, as the number of entries becomes smaller, the electronic device can increase the designated range to a relatively small range and reduce the time required to search for the base station caused by a defective DCXO.

### [Brief Description of Drawings]

FIG. 1 is a block diagram illustrating an electronic device, according to various embodiments of the present disclosure.
FIG. 2 is a block diagram of an electronic device for supporting legacy network communication and 5G network communication according to various embodiments.
FIG. 3 is a diagram illustrating a protocol stack structure of the network 100 of legacy communication and/or 5G communication according to an embodiment.
FIG. 4A is a diagram illustrating an electronic device and a cellular network according to various embodiments of the disclosure.
FIG. 4B is a block diagram of an electronic device according to various embodiments of the disclosure.
FIG. 5 is a block diagram of an electronic device according to various embodiments of the disclosure.
FIGS. 6A and 6B are diagrams illustrating an embodiment of searching for a base station using a signal with a frequency in a designated range in an electronic device according to various embodiments of the disclosure.
FIG. 7 is an operation flowchart illustrating a method for operating an electronic device according to various embodiments of the disclosure.
FIG. 8 is an operation flowchart illustrating a method for operating an electronic device according to various embodiments of the disclosure.

### [Mode for the Invention]

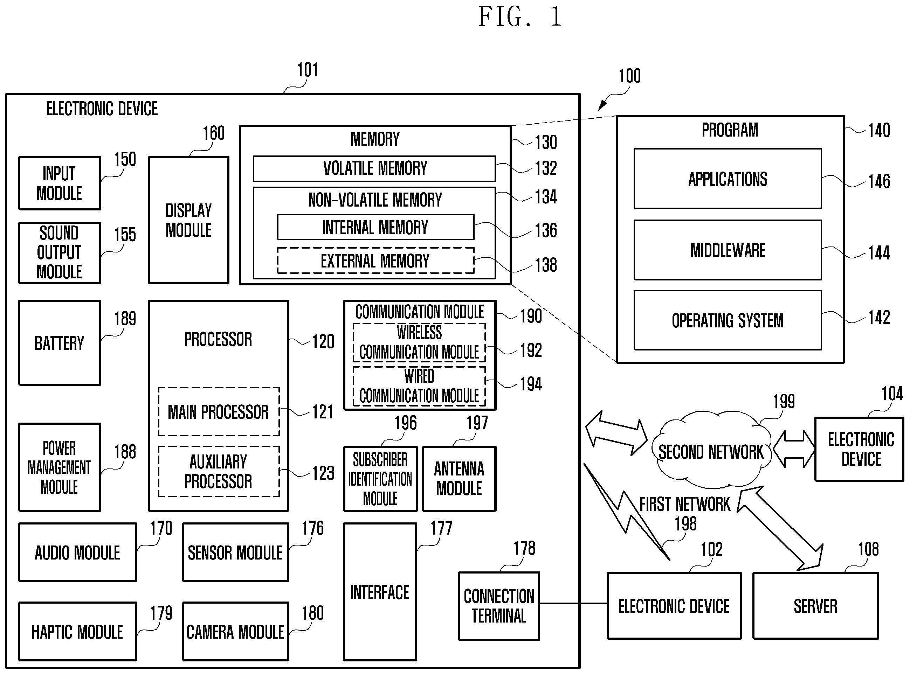

FIG. 1 is a block diagram illustrating an electronic device 101 in a network environment 100 according to certain embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

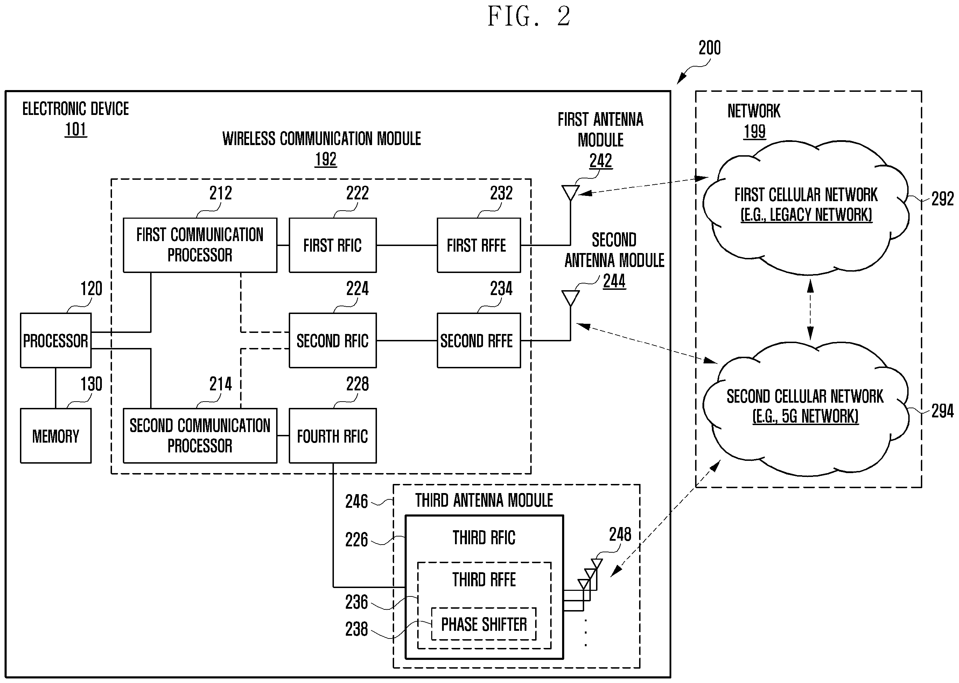

FIG. 2 is a block diagram 200 of an electronic device 101 for supporting legacy network communication and 5G network communication according to certain embodiments. Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The network 199 may include a first network 292 and a second network 294. According to another embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be included as at least a part of the wireless communication module 192. According to another embodiment, the fourth RFIC 228 may be omitted or may be included as a part of the third RFIC 226.

The first communication processor 212 may establish a communication channel of a band to be used for wireless communication with the first network 292, and may support legacy network communication via the established communication channel. According to certain embodiments, the first network may be a legacy network including 2G, 3G, 4G, or long term evolution (LTE) network. The second communication processor 214 may establish a communication channel corresponding to a designated band (e.g., approximately 6GHz to 60 GHz) among bands to be used for wireless communication with the second network 294, and may support 5G network communication via the established channel. According to certain embodiments, the second network 294 may be a 5G network defined in 3GPP. Additionally, according to an embodiment, the first communication processor 212 or the second communication processor 214 may establish a communication channel corresponding to another designated band (e.g., lower than 6GHz) among bands to be used for wireless communication with the second network 294, and may support 5G network communication via the established channel. According to an embodiment, the first communication processor 212 and the second communication processor 214 may be implemented in a single chip or a single package. According to certain embodiments, the first communication processor 212 or the second communication processor 214 may be implemented in a single chip or a single package, together with the processor 120, the sub-processor 123, or the communication module 190.

In the case of transmission, the first RFIC 222 may convert a baseband signal generated by the first communication processor 212 into a radio frequency (RF) signal in a range of approximately 700MHz to 3GHz used for the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal to a baseband signal so that the base band signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) of a Sub6 band (e.g., lower than 6GHz) used for the second network 294 (e.g., 5G network). In the case of reception, a 5G Sub6 RF signal is obtained from the second network 294 (e.g., a 5G network) via an antenna (e.g., the second antenna module 244), and may preprocessed by an RFFE (e.g., the second RFFE 234). The second RFIC 224 may convert the preprocessed 5G Sub6 RF signal into a baseband signal so that the baseband signal is processed by a corresponding communication processor from among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6GHz to 60GHz) to be used for the second network 294 (e.g., 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal to a baseband signal so that the base band signal is processed by the second communication processor 214. According to an embodiment, the third RFFE 236 may be implemented as a part of the third RFIC 226.

According to an embodiment, the electronic device 101 may include the fourth RFIC 228, separately from or as a part of the third RFIC 226. In this instance, the fourth RFIC 228 may convert a baseband signal generated by the second communication processor 214 into an RF signal (hereinafter, an IF signal) in an intermediate frequency band (e.g., approximately 9GHz to 11GHz), and may transfer the IF signal to the third RFIC 226. The third RFIC 226 may convert the IF signal to a 5G Above6 RF signal. In the case of reception, a 5G Above6 RF signal is received from the second network 294 (e.g., a 5G network) via an antenna (e.g., the antenna 248), and may be converted into an IF signal by the third RFFE 226. The fourth RFIC 228 may convert the IF signal to a baseband signal so that the base band signal is processed by the second communication processor 214.

According to an embodiment, the first RFIC 222 and the second RFIC 224 may be implemented as a single chip or at least a part of the single package. According to an embodiment, the first RFFE 232 and the second RFFE 234 may be implemented as a single chip or at least a part of the single package. According to an embodiment, at least one antenna module of the first antenna module 242 or the second antenna module 244 may be omitted, or may be combined with another antenna module so as to process RF signals in a plurality of bands.

According to an embodiment, the third RFIC 226 and the antenna 248 may be disposed in the same substrate, and may form the third antenna module 246. For example, the wireless communication module 192 or the processor 120 may be disposed in a first substrate (e.g., main PCB). In this instance, the third RFIC 226 is disposed in a part (e.g., a lower part) of the second substrate (e.g., a sub PCB) separate from the first substrate and the antenna 248 is disposed on another part (e.g., an upper part), so that the third antenna module 246 is formed. By disposing the third RFIC 226 and the antenna 248 in the same substrate, the length of a transmission line therebetween may be reduced. For example, this may reduce a loss (e.g., attenuation) of a signal in a high-frequency band (e.g., approximate 6GHz to 60GHz) used for 5G network communication, the loss being caused by a transmission line. Accordingly, the electronic device 101 may improve the quality or speed of communication with the second network 294 (e.g., 5G network).

According to an embodiment, the antenna 248 may be implemented as an antenna array including a plurality of antenna elements which may be used for beamforming. In this instance, the third RFIC 226 may be, for example, a part of the third RFFE 236, and may include a plurality of phase shifters 238 corresponding to a plurality of antenna elements. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of the 5G Above6 RF signal received from the outside via a corresponding antenna element into the same or substantially the same phase. This may enable transmission or reception via beamforming between the electronic device 101 and the outside.

The second network 294 (e.g., 5G network) may operate independently (e.g., Stand-Along (SA)) from the first network 292 (e.g., a legacy network), or may operate by being connected thereto (e.g., Non-Stand Alone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access an access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., New Radio (NR) protocol information) for communication with the 5G network may be stored in the memory 230, and may be accessed by another component (e.g., the processor 120, the first communication processor 212, or the second communication processor 214).

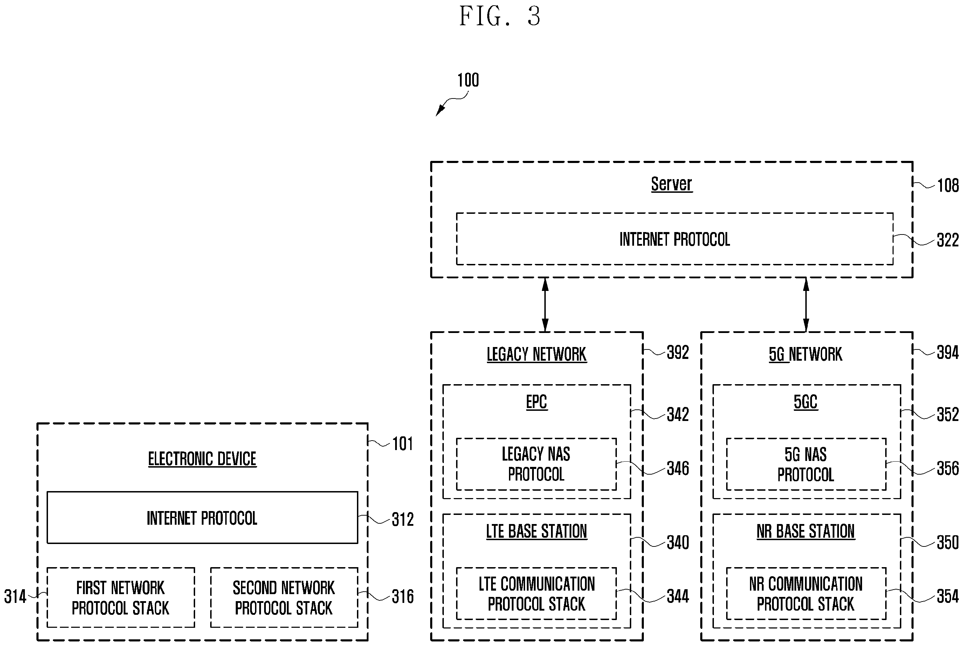

FIG. 3 illustrates a protocol stack structure of the network 100 of legacy communication and/or 5G communication according to an embodiment.

Referring to FIG. 3, the network 100 according to an illustrated embodiment may include the electronic device 101, a legacy network 392, a 5G network 394, and the server 108.

The electronic device 101 may include an Internet protocol 312, a first communication protocol stack 314, and a second communication protocol stack 316. The electronic device 101 may communicate with the server 108 through the legacy network 392 and/or the 5G network 394.

According to an embodiment, the electronic device 101 may perform Interne communication associated with the server 108 through the Internet protocol 312 (for example, a TCP, a UDP, or an IP). The Internet protocol 312 may be executed by, for example, a main processor (for example, the main processor 121 of FIG. 1) included in the electronic device 101.

According to another embodiment, the electronic device 101 may perform wireless communication with the legacy network 392 through the first communication protocol stack 314. According to another embodiment, the electronic device 101 may perform wireless communication with the 5G network 394 through the second communication protocol stack 316. The first communication protocol stack 314 and the second communication protocol stack 316 may be executed by, for example, one or more communication processors (for example, the wireless communication module 192 of FIG. 1) included in the electronic device 101.

The server 108 may include an Internet protocol 322. The server 108 may transmit and receive data related to the Internet protocol 322 to and from the electronic device 101 through the legacy network 392 and/or the 5G network 394. According to an embodiment, the server 108 may include a cloud computing server existing outside the legacy network 392 or the 5G network 394. According to another embodiment, the server 108 may include an edge computing server (or a mobile edge computing (MEC) server) located inside at least one of the legacy network or the 5G network 394.

The legacy network 392 may include an LTE eNode B (eNB) 340 and an EPC 342. The LTE eNB 340 may include an LTE communication protocol stack 344. The EPC 342 may include a legacy NAS protocol 346. The legacy network 392 may perform LTE wireless communication with the electronic device 101 through the LTE communication protocol stack 344 and the legacy NAS protocol 346.

The 5G network 394 may include an NR gNB 350 and a 5GC 352. The NR gNB 350 may include an NR communication protocol stack 354. The 5GC 352 may include a 5G NAS protocol 356. The 5G network 394 may perform NR wireless communication with the electronic device 101 through the NR communication protocol stack 354 and the 5G NAS protocol 356.

According to an embodiment, the first communication protocol stack 314, the second communication protocol stack 316, the LTE communication protocol stack 344, and the NR communication protocol stack 354 may include a control plane protocol for transmitting and receiving a control message and a user plane protocol for transmitting and receiving user data. The control message may include a message related to at least one of, for example, security control, bearer setup, authentication, registration, or mobility management. The user data may include, for example, the remaining data except other than the control message.

According to an embodiment, the control plane protocol and the user plane protocol may include a physical (PHY) layer, a medium access control (MAC) layer, a radio link control (RLC) layer, or a packet data convergence protocol (PDCP) layer. The PHY layer may channel-code and modulate data received from, for example, a higher layer (for example, the MAC layer), transmit the data through a radio channel, demodulate and decode the data received through the radio channel, and transmit the data to the higher layer. The PHY layer included in the second communication protocol stack 316 and the NR communication protocol stack 354 may further perform an operation related to beamforming. The MAC layer may logically/physically map, for example, data to a radio channel for transmitting and receiving the data and perform a hybrid automatic repeat request (HARQ) for error correction. The RLC layer may perform, for example, data concatenation, segmentation, or reassembly, and data sequence identification, reordering, or duplication detection. The PDCP layer may perform an operation related to, for example, ciphering of a control message and user data and data integrity. The second communication protocol stack 316 and the NR communication protocol stack 354 may further include a service data adaptation protocol (SDAP). The SDAP may manage allocation of radio bearers on the basis of quality of service (QoS) of user data.

According to certain embodiments, the control plane protocol may include a radio resource control (RRC) layer and a non-access stratum (NAS) layer. The RRC layer may process control, for example, data related to radio bearer setup, paging, or mobility management. The NAS may process, for example, a control message related to authentication, registration, or mobility management.

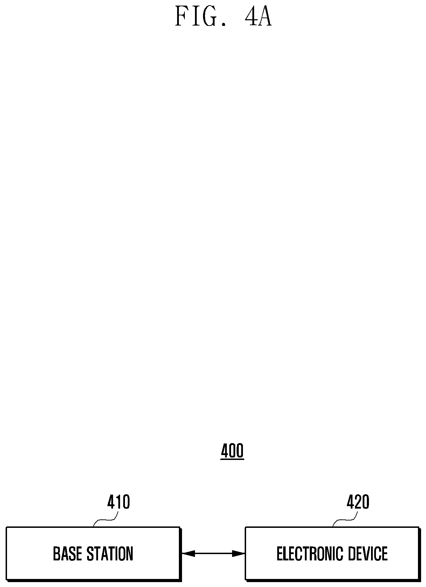

FIG. 4A is a diagram illustrating an electronic device and a cellular network according to various embodiments of the disclosure.

According to various embodiments of the disclosure, a cellular network 400 may include a node 410 (e.g., NR base station 350 in FIG. 3).

According to various embodiments of the disclosure, a base station 410 may be a base station that supports a first cellular communication. The first cellular communication may refer to any one of various cellular communication methods that an electronic device 420 may support, and may refer to, for example, a communication method on the second cellular network 294 in FIG. 2. For example, the first cellular communication may be one of the 5th generation mobile communication methods (e.g., a communication scheme using FR1, a frequency band of 6 GHz or less, or a communication method using FR2, a frequency band of 6 GHz or greater). According to an embodiment, the base station 410 may be a base station that outputs a signal in a first frequency band (e.g., a frequency band of 6 GHz or greater).

The electronic device 420 may perform registration on the cellular network 400 and transmit and/or receive various data with an external electronic device (e.g., the electronic device 104 in FIG. 1) through the base station 410.

In order to attempt to register with the cellular network 400, the electronic device 420 searches for the base station 410 included in the cellular network 400, and as the search for the base station 410 is completed, the base station 410 may perform a registration procedure with the cellular network 400.

The electronic device 420 may receive a synchronization signal/physical broadcast channel block (SS/PBCH block) broadcast by the base station 410 before registering with the cellular network 400. The SS/PBCH block is data required when the electronic device 420 searches for the base station 410 to which the electronic device 420 is to be connected, and the SS/PBCH block may be broadcast by the base station 410 at designated periods (e.g., 20 ms).

The electronic device 420 may decode the SS/PBCH block and synchronize with the base station 410 based on the signal obtained through decoding. The electronic device 420 may obtain a master information block (MIB) through a physical broadcast channel (PBCH) included in the SS/PBCH block. The electronic device 420 may obtain identification information (or physical identification information) of the base station 410, information related to a paging message, and/or a system frame number of the SS/PBCH block through the master information block.

The electronic device 420 may access the base station 410 based on the obtained information and perform downlink synchronization with the base station 410. The electronic device 420 may perform random access to perform uplink synchronization with the base station 410, and as the random access procedure is completed, the electronic device 420 may perform a registration procedure in the cellular network 400. After registering with the cellular network 400, the electronic device 420 may transmit or receive data to the external electronic device 104.

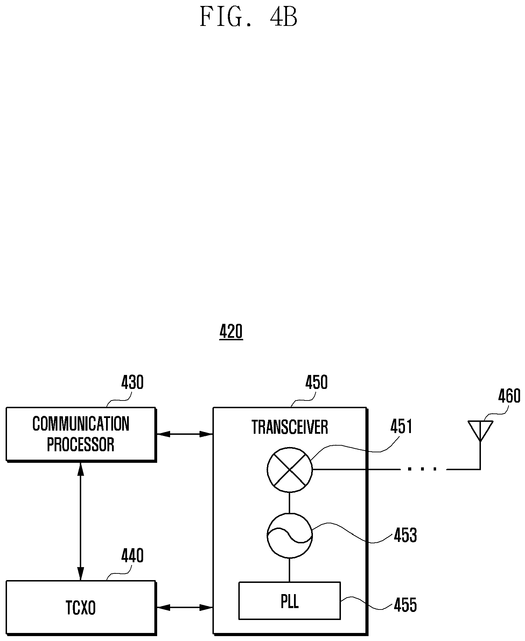

The procedures described above may be implemented on the premise that the electronic device 420 performs a search for the base station 410. In order to search for the base station 410, the electronic device 420 may perform a procedure to discover a signal (e.g., SS/PBCH) broadcast by the base station 410 in a predesignated frequency band. The electronic device 420 may identify the characteristics (e.g., frequency band of the signal, carrier frequency) of the signal broadcast by the base station 410, and perform frequency synchronization, which matches the frequency of the signal broadcast by the base station 410 and the frequency of the reference signal used in the communication circuit (e.g., first RFIC 222, second RFIC 224, and/or fourth RFIC 228 in FIG. 2) of the electronic device 420. The frequency synchronization is an essential procedure for converting a signal broadcast by the base station 410 into a baseband signal. The frequency synchronization is described in detail in FIG. 4B.

FIG. 4B is a block diagram of an electronic device according to various embodiments of the disclosure.

With reference to FIG. 4B, an electronic device (e.g., electronic device 420 in FIG. 4a) may include a communication processor 420 (e.g., first communication processor 212 or second communication processor 214 in FIG. 2), temperature-compensated crystal oscillators (TCXOs) 440, a transceivers 450 (e.g., first RFIC 222, second RFIC 224, or fourth RFIC 228 in FIG. 2), and/or an antenna 460 (e.g., first antenna module 242, second antenna module 244, or third antenna module 246 in FIG. 2).

According to various embodiments of the disclosure, the communication processor 420 may receive or transmit control data or user data through cellular wireless communication (e.g., 2nd generation mobile communication, 3rd generation mobile communication, 4th generation mobile communication, and/or 5th generation mobile communication). The communication processor 420 may establish a cellular communication connection with a base station (e.g., base station 410 in FIG. 4A) through control data, and transmit data received from an application processor (e.g., processor 120 in FIG. 1) to the base station or data received from the base station to the application processor 120 through the established cellular communication.

According to various embodiments of the disclosure, the transceiver 450 may perform various operations to process signals received from the communication processor 430. For example, the transceiver 450 may perform a modulation operation on a signal received from the communication processor 430. For example, the transceiver 450 may perform a frequency modulation operation to convert a baseband signal into a radio frequency (RF) signal to be used for cellular communication.

The transceiver 450 may perform a demodulation operation on a signal received from an outside through the antenna 460. For example, the transceiver 450 may perform a frequency demodulation operation to convert a radio frequency (RF) signal into a baseband signal.

The transceiver 450 may include a mixer 451 that converts the frequency of the signal transmitted by the base station 410 having a radio frequency (RF) into a baseband signal on the basis of a difference between the signal received through the antenna 460 and the reference signal output by a local oscillator.

The transceiver 450 may include a local oscillator 453 that transmits a reference signal to the mixer 451 and a phase locked loop (PLL) 455 that maintains the frequency of the reference signal output by the local oscillator 453 within a certain range.

The TCXO 440 may include a crystal element that vibrates at a specific frequency corresponding to the voltage depending on the voltage applied by the communication processor 430. The frequency band for vibration of the crystal element may vary depending on the temperature. Accordingly, the TCXO 440 may adjust the frequency band of the signal using an element having different impedances depending on a temperature value. The TCXO 440 may serve as a reference clock so that the signal used by the transceiver 450 has a designated frequency band. The transceiver 450 may generate a signal in a required frequency band (e.g., reference frequency) based on the reference clock and convert the signal received through the antenna 460 into a baseband signal.

The communication processor 430 may perform a series of operations to identify the characteristics of a signal broadcast by the base station 410 in order to search for the base station 410. The communication processor 430 may control the TCXO 440 to generate the reference clock with the reference frequency obtained in various ways (e.g., identifying carrier frequency information corresponding to channels supported by the network, which is previously stored on the electronic device 420). The communication processor 430 may control the transceiver 450 to generate a signal with the reference frequency using the reference clock generated by the TCXO 440. For example, the transceiver 450 may control the PLL 455 and local oscillator 453 to generate a signal with the reference frequency using the reference clock. The communication processor 430 may control the transceiver 450 to convert a signal received through the antenna 460 into a baseband signal based on the basis of a signal having the reference frequency. For example, the transceiver 450 may generate a baseband signal by down converting the signal received through the antenna 460 using a signal with the reference frequency output from the local oscillator 453.

The communication processor 430 may receive the baseband signal transmitted by the transceiver 450 and perform decoding of the received signal. The communication processor 430 may determine that the search for the base station 410 has been successful as it identifies that the information obtained through decoding is information (e.g., MIB or SIB) required for connection to the base station 410. Alternatively, when the communication processor 430 fails to decode the received signal or identifies that the information obtained through decoding is not information (e.g., MIB or SIB) required for connection with the base station 410, the processor 430 may determine that the search of the base station 410 has failed.

However, the frequency of the signal broadcast by the base station 410 and the frequency of the signal used by the transceiver 450 may not match. For example, as the electronic device 420 moves, the frequency of the signal broadcast by the base station 410 may change due to the Doppler effect, and due to the aging of the base station 410, the frequency of the signal broadcast by the base station may be different from the predesignated frequency. The electronic device 420 may support automatic frequency control (AFC) in consideration of the above phenomenon. AFC may refer to the function of changing the frequency (e.g., 2.6 GHz) of the signal generated by the transceiver 450 within a predetermined range (e.g., 5 ppm; 2.599974 GHz to 2.6000026 GHz). In the operation of changing the signal broadcast by the base station 410 into a baseband signal through the antenna 460, the communication processor 430 may identify the frequency of the signal broadcast by the base station 410 while changing the frequency of the reference signal used within a predesignated range. For example, the communication processor 430 may change the signal broadcast by the base station 410 into a baseband signal using a reference signal with a frequency changed within a designated range, and in case that decoding is successful, the communication processor may determine the changed frequency as the frequency of the signal broadcast by the base station 410.

However, since the TCXO 440 occupies a large space on the electronic device 420, there is a trend toward converting to digitally compensated crystal oscillator (DCXO) which is smaller and less expensive than the TCXO 440. The DCXO may include a crystal element that vibrates at a reference frequency on the basis of the control of the communication processor 430. The frequency band for vibration of a crystal element may vary depending on the temperature. The DCXO may transmit the temperature value measured by the temperature sensor inside the DCXO to the communication processor 430, and the communication processor 430 may transmit, to the DCXO, a signal that controls a separate element to compensate for the frequency that varies depending on the temperature. The DCXO may compensate for the frequency band of the signal using an element with different impedances depending on temperature, on the basis of the control of the communication processor 430. The DCXO or TCXO 440 may serve as a reference clock so that the signal used by the transceiver 450 has a designated frequency band. The transceiver 450 may generate a signal in a required frequency band (e.g., reference frequency) based on the reference clock and convert the signal received through the antenna 460 into a baseband signal.

However, since the DCXO generates a reference clock on the basis of the control of the communication processor 430, in case that an error occurs in the control of the communication processor 430, a difference between the frequency generated by the transceiver 450 and the reference frequency may occur or increase. In case that the frequency generated by the transceiver 450 has a relatively large difference from the reference frequency, a situation may occur in which the search of the base station 410 fails even if the frequency of the signal generated by the transceiver 450 is adjusted through AFC.

Furthermore, due to the aging phenomenon of various components (e.g., crystal or elements connected to the crystal) included in the DCXO or TCXO, a situation may occur where the clock transmitted to the transceiver 450 is different from the reference clock. Also, due to the aging phenomenon of the base station 410, a situation may occur where the frequency of the signal transmitted by the base station 410 is different from the reference frequency. These situations may greatly affect the failure of the search of the base station 410.

Hereinafter, an embodiment in which the search for the base station 410 may be successful even in the situation described above by changing the frequency band of the reference signal used to change the signal broadcast by the base station 410 into a baseband signal will be described.

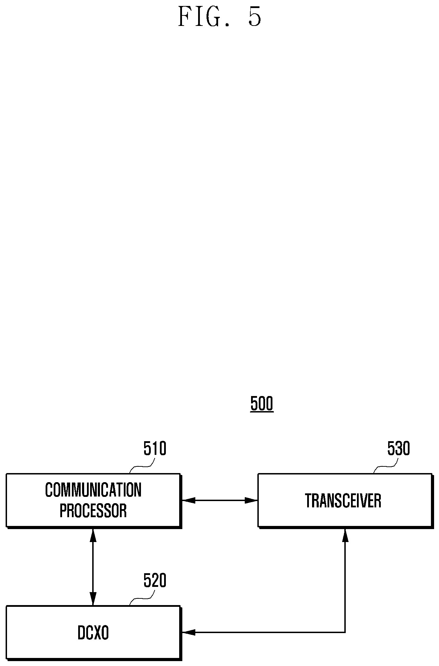

FIG. 5 is a block diagram of an electronic device according to various embodiments of the disclosure.

With reference to FIG. 5, an electronic device (e.g., electronic device 420 in FIG. 4A) may include a communication processor 510 (e.g., first communication processor 212 or second communication processor 214 in FIG. 2), digitally compensated crystal oscillators (DCXOs) 520, and a transceiver 530 (e.g., first RFIC 222, second RFIC 224, or fourth RFIC 228 in FIG. 2).

According to various embodiments of the disclosure, the communication processor 510 may receive or transmit control data or user data through cellular wireless communication (e.g., 2nd generation mobile communication, 3rd generation mobile communication, 4th generation mobile communication, and/or 5th generation mobile communication). The communication processor 510 may establish a cellular communication connection with a base station (e.g., base station 410 in FIG. 4A) through control data, and transmit data received from an application processor (e.g., processor 120 in FIG. 1) to a base station or data received from the base station to the application processor 120 through the established cellular communication.

According to various embodiments of the disclosure, the transceiver 530 may perform various operations to process signals received from the communication processor 510. For example, the transceiver 530 may perform a modulation operation on a signal received from the communication processor 510. For example, the transceiver 530 may perform a frequency modulation operation to convert a baseband signal into a radio frequency (RF) signal to be used for cellular communication.

The transceiver 530 may perform a demodulation operation on a signal received from an outside through the antenna (e.g., antenna 460 in FIG. 4B). For example, the transceiver 530 may perform a frequency demodulation operation to convert a radio frequency (RF) signal into a baseband signal.

The transceiver 530 may include a mixer (e.g., mixer 451 in FIG. 4B) that converts the frequency of the signal transmitted by the base station 410 having a radio frequency (RF) into a baseband signal on the basis of a difference between the signal received through the antenna 460 and the reference signal output by a local oscillator.

The transceiver 530 may include a local oscillator (e.g., local oscillator 453 in FIG. 4B) that transmits a reference signal having a reference frequency to the mixer 451 and a phase locked loop (PLL) (e.g., PLL 455 in FIG. 4B) that maintains the frequency of the reference signal output from the local oscillator 453 within a certain range.

The DCXO 520 may generate a reference clock on the basis of the control of the communication processor 510. The reference clock generated by the DCXO 520 may be used by the transceiver 530 (or PLL 455) to generate a signal with a reference frequency corresponding to the reference clock. The DCXO 520 may include a crystal element that vibrates at a reference frequency on the basis of the control of the communication processor 510. The frequency band for vibration of the crystal element may vary depending on the temperature. The DCXO may transmit the temperature value measured by a temperature sensor inside the DCXO to the communication processor 510, and the communication processor 510 may transmit, to the DCXO 520, a control signal that controls a separate element (e.g., capacitor) to compensate for the frequency that varies depending on the temperature. The DCXO 520 may compensate for the frequency band of the signal using an element having different impedances depending on temperature, on the basis of the control of the communication processor 510. The DCXO 520 may serve as a reference clock so that the signal used by the transceiver 530 has a designated frequency band. The transceiver 520 may generate a signal in a required frequency band (e.g., reference frequency) on the basis of the reference clock and convert the signal received through the antenna 460 into a baseband signal. The reference signal described below is a reference signal generated using the reference clock generated by the DCXO 520, and may refer to a signal used to search for a signal broadcast by the base station 410.

The communication processor 510 may control the transceiver 530 to search for the base station 410 included in a network to which the electronic device 500 is to be connected (e.g., cellular network 400 in FIG. 4B). When searching for the base station 410, the communication processor 510 may control the transceiver 530 to activate automatic frequency control (AFC). AFC may refer to a function that changes the frequency (e.g., 2.6 GHz) of the signal to be generated by the transceiver 530 within a predetermined range (e.g., 5 ppm; 2.599974 GHz to 2.6000026 GHz). The communication processor 510 may identify whether the same frequency as the frequency of the signal broadcast by the base station 410 exists within a designated range, and/or perform frequency drift correction to match the frequency of the signal broadcast by the base station 410 and the frequency of the reference signal, while changing the reference signal within a designated range through the AFC function

In the operation of changing the signal broadcast by the base station 410 into a baseband signal through the antenna 460, the communication processor 510 may identify the frequency of the signal broadcast by the base station 410 while changing the frequency of the reference signal used within a predesignated range. For example, the communication processor 510 may change the signal broadcast by the base station 410 into a baseband signal while changing the frequency of the reference signal within a designated range, and in case that decoding is successful, the communication processor may determine the changed frequency as the frequency of the signal broadcast by the base station 410. Alternatively, when the communication processor 510 fails to decode the received signal or identifies that the information obtained through decoding is not information (e.g., MIB or SIB) required for connection with the base station 410, it may be determined that the search of the base station 410 has failed.

The failure in the search of the base station 410 may be caused by the aging of the DCXO 520 itself and/or an error in the temperature compensation function of the DCXO 520 performed by the communication processor 510. However, the disclosure is not limited thereto.

The communication processor 510 may enter a mode for changing a designated range based on identification that the search for the base station 410 has been attempted by changing the frequency of the reference signal within a designated range, but the search for the base station 410 has failed. Alternatively, the communications processor 510 may enter the mode for changing a designated range on the basis of the failure of search for the base station 410 through all cellular communications (e.g., NR, LTE, 3G, and/or 2G) supported by the electronic device 500.

The mode for changing a designated range may mean a mode in which the search for the base station 410 is attempted again by changing the frequency of the reference signal within the changed (or increased) designated range.

As the communication processor 510 enters the mode for changing a designated range, the designated range configured in the AFC function may be changed. For example, the communications processor 510 may change the designated range to a range (e.g., 2.599961 GHz to 2.6000039 GHz, which is 15 ppm range on the basis of the reference frequency of 2.6 GHz) greater than a previously designated range (e.g., 2.599974 GHz to 2.6000026 GHz, which is a 5 ppm range on the basis of the reference frequency of 2.6 GHz).

The communication processor 510 may search for the base station 410 again on the basis of the reference signal with the changed frequency range. According to an example, assuming that the frequency of the signal broadcasted by the base station 410 is 2.6000030 GHz, the communication processor 510 may be successful in searching the base station 410 on the basis of the reference signal having the frequency in the changed range (e.g., 2.599961 GHz to 2.6000039 GHz, which is a 15 ppm range on the basis of the reference frequency of 2.6 GHz). In case that the signal broadcast by the base station 410 is changed to a baseband signal using the reference signal with a frequency within the changed range, and decoding is successful, the communication processor 510 may determine that the search for the base station 410 is successful, and determine the changed frequency as the frequency of the signal broadcasted by the base station 410. The communication processor 510 may change the signal transmitted by the base station 410 into a baseband signal on the basis of the reference signal with the changed frequency, and receive data by perform decoding.

As part of the operation of determining the range to be changed, the communication processor 510 may determine a range to be changed on the basis of the number of times a mode for changing the designated range of the reference signal generated by the transceiver 530 is entered (or the number of times an operation is performed to change the designated range).

The communication processor 510 may change a designated range so that the size of the changed range is different depending on the number of times a mode for changing the designated range is entered (or the number of times an operation is performed to change the designated range). The communication processor 510 may change the designated range so that as the number of times the mode for changing the designated range is entered increases, the size of the changed range increases. The increase in the number of times the mode for changing the designated range is entered means that the search of the base station 410 frequently fails, and the communication processor 510 may perform the search of the base station 410 by increasing the size of the range to be changed. The communication processor 510 may configure the size of the changed range to the maximum value in case that the number of times the mode is entered is or greater than (or exceeds) a designated number of times. For example, assuming that the range of the changeable frequency band of the electronic device 500 is 28ppm, the communication processor 510 may configure the designated range as shown in Table 1 below.

**[Table 1]**

| Number of entering | Designated range |
|---|---|
| 0 | 5ppm(previously designated range) |
| 1 | 7ppm(25% of the maximum value of designated range) |
| 2 | 14ppm(50% of the maximum value of designated range) |
| 3 | 21(75% of the maximum value of designated range) |
| 4 or greater | 28(100% of the maximum value of designated range) |

In case that the communication processor 510 succeeds in searching the base station 410, the communication processor 510 may store historical data including the characteristics (e.g., reference frequency and frequency band) of the reference signal used in the search of the base station 410 in memory (e.g., memory 130 in FIG. 1). The communication processor 510 may use the historical data in determining the size of the changed range in the mode for changing the designated range. The communication processor 510 may compensate for errors in the DCXO 520 by configuring the frequency band of the reference signal to be used to search for the base station 410 to the designated range, on the basis of the historical data.

When determining the designated range in the mode for changing the designated range, the communication processor 510 may select a frequency band from historical data on the basis of the number of times the mode is entered and configure the selected frequency band to the designated range. As the number of mode entries increases, the communication processor 510 may configure a relatively previously used frequency band to the designated range and search for the base station 410. According to an embodiment, in case of first entering the mode for changing the designated range, the communication processor 510 may configure the range of the frequency band used in the most recent successful search of the base station 410 to the designated range. In case of entering the mode for changing the designated range twice, the communication processor 510 may configure the range of the second most recently used frequency band to the designated range.

The communication processor 510 may change (or increase) the designated range not only in a situation where the base station 410 is not searched, but also in a situation where another base station in another network is searched. The communication processor 510 may be connected to another base station to perform a specific service (e.g., roaming service or emergency call service) in a situation where another base station of another network is searched. While connected to another base station, the communication processor 510 may enter the mode for changing the designated range to connect to the base station 410 provided by the network 400, change the designated range, and then attempt to search for the base station 410 using the reference signal having the changed range.

The communication processor 510 may successfully search for the base station 410 and, while connected to the base station 410, the communication processor 510 may receive information related to a frequency band to be used for searching for another base station from the network 400. According to an embodiment, the network 400 may release a connection between the base station 410 and the electronic device 500 and transmit information related to a frequency band to be used for searching for another base station to the electronic device 500 as part of a connection operation procedure (e.g., handover, redirection or re-selection) between another base station and the electronic device 500.

The communication processor 510 may receive information related to the frequency band to be used for searching for another base station transmitted by the network 400, and attempt to search for another base station using the frequency band included in the information related to the frequency band. However, the communication processor 510 may fail to search for another base station. In this case, the communication processor 510 may measure the quality of a signal broadcast by another base station and determine whether the quality of the signal satisfies a designated condition (e.g., the quality of the signal is greater than or equal to (or exceeding) a designated value). The communication processor 510 may search for another base station again on the basis of a signal of a frequency having a larger range than the range of the frequency band used for the search of another base station, on the basis of the quality of the signal satisfying a designated condition.

As in the embodiment described above, the electronic device 500 may control the transceiver 530 to perform AFC using a relatively larger range of frequency bands in order to prevent search failure of the base station 410 caused by an error in the DCXO 520 (e.g., aging of the DCXO 520 or an error in the temperature compensation function of the DCXO 520). Accordingly, the electronic device 500 may attempt and succeed in searching for the base station 410 on the basis of a reference signal having a relatively larger range of frequency bands.

In FIG. 5 , one DCXO 520 is shown, but the electronic device 500 may further include a plurality of DCXOs 520 to generate reference clocks in different frequency bands. The electronic device 500 including the plurality of DCXOs 520 may apply the above-described embodiment to at least some DCXOs among the plurality of DCXOs 520.

The electronic device 500 may attempt to search for a signal broadcast by the base station 410 through the operation illustrated in FIG. 5 and may identify that the search for the broadcast signal fails. The electronic device 500 may change the frequency band of the reference signal by changing the characteristics of components (e.g., capacitors) included within the DCXO 520 on the basis of failure to search for a broadcasting signal. The size of change in the frequency band that is changed by changing the characteristics of the component may be larger than the size of change in the frequency band that is changed using AFC. According to an embodiment, the characteristics of the capacitor included within the DCXO 520 may be changed on the basis of a control signal from the communication processor 510.

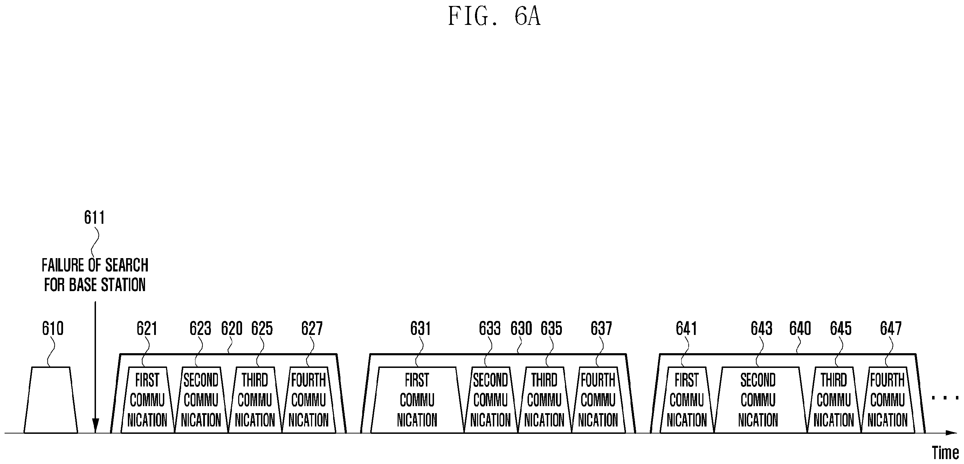

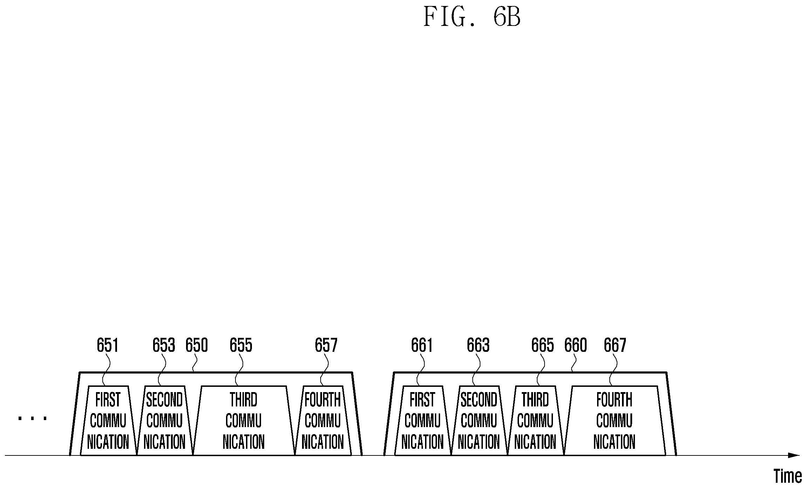

FIGS. 6A and 6B are diagrams illustrating an embodiment of searching for a base station using a signal with a frequency in a designated range in an electronic device according to various embodiments of the disclosure.

With reference to FIGS. 6A and 6B, an embodiment is illustrated in which an electronic device (e.g., electronic device 500 in FIG. 5) fails to search for a base station (e.g., base station 410 in FIG. 4a) using a reference signal having a frequency in a designated range, and then, sequentially attempts to search for the base station 410 using signals with frequencies in the changed range.

The electronic device 500 may configure a reference frequency corresponding to the PLMN on the basis of public land mobile network (PLMN) information stored in memory (e.g., memory 130 in FIG. 1) and search for the base station 410 using a reference signal having a frequency in a designated range including the reference frequency (610).

The electronic device 500 may identify that the search for the base station 410 has failed (611), and search for the base station 410 through the frequency band of all communication methods (e.g., first communication, second communication, third communication and/or fourth communication) supported by the electronic device 500 (620).

When searching for the base station 410, the electronic device 500 may control a transceiver (e.g., transceiver 530 in FIG. 5) to activate automatic frequency control (AFC). AFC may refer to a function that changes the frequency (e.g., 2.6 GHz) of the signal to be generated by the transceiver 530 within a predesignated range (e.g., 5 ppm; 2.599974 GHz to 2.6000026 GHz).

In order to search for the base station 410 supporting a first communication, the electronic device 500 may include a first reference frequency band for performing the first communication and search for the base station 410 using a reference signal having a designated first range of frequencies including a first reference frequency (621).

The electronic device 500 may identify that the search for the base station 410 supporting the first communication has failed, include a second reference frequency band for performing a second communication in order to search for the base station 410 supporting the second communication, and search for the base station 410 using a reference signal having a frequency in a designated second range including a second reference frequency (623).

The electronic device 500 may identify that the search for the base station 410 supporting the second communication has failed, include a third reference frequency band for performing a third communication in order to search for the base station 410 supporting the third communication, and search for the base station 410 using a reference signal having a frequency in a designated third range including a third reference frequency (625).

The electronic device 500 may identify that the search for the base station 410 supporting the third communication has failed, include a fourth reference frequency band for performing a fourth communication in order to search for the base station 410 supporting the fourth communication, and search for the base station 410 using a reference signal having a frequency in a designated fourth range including a fourth reference frequency (627).

As the electronic device 500 fails to search for the base station 410 through all wireless communications supported by the electronic device 500, it may enter a mode for changing the designated range.

The mode for changing the designated range may mean a mode in which the search for the base station 410 is attempted again by changing the frequency of the reference signal within the changed (or increased) designated range.

As the electronic device 500 enters the mode for changing the designated range, it may change the designated range configured in the AFC function. For example, the communications processor 510 may change the designated range to a range (e.g., 2.599961 GHz to 2.6000039 GHz, which is a 15 ppm range on the basis of the reference frequency of 2.6 GHz) greater than a previously designated range (e.g., 2.599974 GHz to 2.6000026 GHz, which is a 5 ppm range on the basis of the reference frequency of 2.6 GHz).

The electronic device 500 may change a designated range in the process of searching for the base station 410 through at least one wireless communication among all wireless communications (e.g., first communication, second communication, third communication, and/or fourth communication) supported by the electronic device 500. For example, the electronic device 500 may change a designated range in the process of searching for the base station 410 through at least one wireless communication (e.g., first communication) among all wireless communications (e.g., first communication, second communication, third communication, and/or fourth communication) supported by the electronic device 500, and maintain the designated range without changing in the process of searching for the base station 410 through another wireless communication (e.g., second communication, third communication, and/or fourth communication). The electronic device 500 may identify that the search for the base station 410 using the changed range has failed, and change the designated range in the process of searching for the base station 410 through another communication method (e.g., second communication).

With reference to FIG. 6A, the electronic device 500 may search for the base station 410 (630). In order to search for the base station 410 supporting a first communication, the electronic device 500 may include a first reference frequency band for performing the first communication, and search for the base station 410 using a reference signal having a frequency range greater than a designated first range including a first reference frequency (631).

The electronic device 500 may identify that the search for the base station 410 supporting the first communication has failed, include a second reference frequency band for performing a second communication in order to search for the base station 410 supporting the second communication, and search for the base station 410 using a reference signal having a designated second range of frequency, including a second reference frequency (633).

The electronic device 500 may identify that the search for the base station 410 supporting the second communication has failed, include a third reference frequency band for performing a third communication in order to search for the base station 410 supporting the third communication, and search for the base station 410 using a reference signal having a designated third range of frequency, including a third reference frequency (635).

The electronic device 500 may identify that the search for the base station 410 supporting the third communication has failed, include a fourth reference frequency band for performing a fourth communication in order to search for the base station 410 supporting the fourth communication, and search for the base station 410 using a reference signal having a designated fourth range of frequency, including a fourth reference frequency (637).

The electronic device 500 may identify that the search for the base station 410 using the changed range has failed, and change the designated range in the process of searching for the base station 410 through another communication method (e.g., second communication).

With reference to FIG. 6A, the electronic device 500 may search for the base station 410 (640). The electronic device 500 may include the first reference frequency band for performing the first communication in order to search for the base station 410 supporting the first communication, includes the designated first range including the first reference frequency, and search for the base station 410 using the reference signal generated using the reference clock generated by the DCXO 520 (641).

The electronic device 500 may identify that the search for the base station 410 supporting the first communication has failed, include the second reference frequency band for performing the second communication in order to search for the base station 410 supporting the second communication, include the frequency range greater than the designated second range including the second reference frequency, and search for the base station 410 using the reference signal generated using the reference clock generated by the DCXO 520 (643).

The electronic device 500 may identify that the search for the base station 410 supporting the second communication has failed, include the third reference frequency band for performing the third communication in order to search for the base station 410 supporting the third communication, include the designated third range including the third reference frequency, and search for the base station 410 using the reference signal generated using the reference clock generated by the DCXO 520 (645).

The electronic device 500 may identify that the search for the base station 410 supporting the third communication has failed, include the fourth reference frequency band for performing the fourth communication in order to search for the base station 410 supporting the fourth communication, and search for the base station 410 using the reference signal having the designated fourth range of frequencies including the fourth reference frequency (647).

The electronic device 500 may identify that the search for the base station 410 using the changed range has failed, and in the process of searching for the base station 410 through another communication method (e.g., third communication), the designated range of the generated reference signal may be changed using the reference clock generated by DCXO 520.

With reference to FIG. 6B, the electronic device 500 may search for the base station 410 (650). In order to search for the base station 410 supporting a first communication, the electronic device 500 may include a first reference frequency band for performing the first communication, and search for the base station 410 using a reference signal having a designated first range including a first reference frequency (651).

The electronic device 500 may identify that the search for the base station 410 supporting the first communication has failed, include a second reference frequency band for performing a second communication in order to search for the base station 410 supporting the second communication, and search for the base station 410 using a reference signal having a designated second range including a second reference frequency (653).

The electronic device 500 may identify that the search for the base station 410 supporting the second communication has failed, include a third reference frequency band for performing a third communication in order to search for the base station 410 supporting the third communication, and search for the base station 410 using a reference signal having a frequency range greater than a designated third range including a third reference frequency (655).

The electronic device 500 may identify that the search for the base station 410 supporting the third communication has failed, include a fourth reference frequency band for performing a fourth communication in order to search for the base station 410 supporting the fourth communication, and search for the base station 410 using a reference signal having a frequency range greater than a designated fourth range including a fourth reference frequency (657).

The electronic device 500 may identify that the search for the base station 410 using the changed range has failed, and change the designated range in the process of searching for the base station 410 through another communication method (e.g., fourth communication).

With reference to FIG. 6B, the electronic device 500 may search for the base station 410 (660). The electronic device 500 may include the first reference frequency band for performing the first communication in order to search for the base station 410 supporting the first communication, and search for the base station 410 using the reference signal having the designated first range including the first reference frequency (661).

The electronic device 500 may identify that the search for the base station 410 supporting the first communication has failed, include the second reference frequency band for performing the second communication in order to search for the base station 410 supporting the second communication, and search for the base station 410 using the reference signal having the designated second range frequency including the second reference frequency (663).

The electronic device 500 may identify that the search for the base station 410 supporting the second communication has failed, include the third reference frequency band for performing the third communication in order to search for the base station 410 supporting the third communication, and search for the base station 410 using the reference signal having the designated third range including the third reference frequency (665).

The electronic device 500 may identify that the search for the base station 410 supporting the third communication has failed, include the fourth reference frequency band for performing the fourth communication in order to search for the base station 410 supporting the fourth communication, and search for the base station 410 using the reference signal having a range of frequencies greater than the designated fourth range including the fourth reference frequency (667).

The electronic device 500 may performs a connection procedure with the base station 410 supporting the fourth communication, on the basis of the successful search for the base station 410 supporting the fourth communication, and perform the registration process with the network supporting the fourth communication. After the registration process with the network is completed, the electronic device 500 may transmit or receive data through the base station 410.

An electronic device according to various embodiment of the disclosure comprises a communication processor; a digitally compensated crystal oscillator (DCXO) that generates a reference clock for generating a signal having a reference frequency; and a transceiver that supports auto frequency control (AFC) performed to control the signal to have a frequency of designated range, wherein the communication processor is configured to control the transceiver to search for a base station included in a network to which the electronic device is to be connected by changing the frequency of the signal within the designated range, enter, on the basis of a failure of the search for the base station, a mode for changing the designated range, change a size of the designated range, and search for the base station again on the basis of a signal having a frequency of the changed range.

In the electronic device according to various embodiments of the disclosure, the communication processor may be configured so that the size of the changed range varies depending on the number of times the mode is entered.

In the electronic device according to various embodiments of the disclosure, the communication processor may be configured to increase the size of the changed range as the number of times the mode is entered increases.

In the electronic device according to various embodiments of the disclosure, the communication processor may configure the size of the changed range to a maximum value on the basis of the number of entries being greater than or equal to a designated value.

In the electronic device according to various embodiments of the disclosure, the communication processor may be configured to enter the mode in case that the search for the base station through all wireless communications supported by the electronic device has failed.

In the electronic device according to various embodiments of the disclosure, the electronic device may further include a memory that stores historical data including the designated range used when successful accessing the network stored in the memory. The communication processor may be configured to select a designated range included in the historical data on the basis of the number of times the mode is entered, and to search for the base station on the basis of a signal having a frequency in the selected designated range.

In the electronic device according to various embodiments of the disclosure, as the number of times the mode is entered increases, the electronic device may be configured to search for the base station on the basis of a signal having a frequency in a designated range that has been used relatively earlier.

In the electronic device according to various embodiments of the disclosure, the communication processor may be configured to increase the designated range based on a search for a base station in a network other than the network or failure to search for a base station in the network.

In the electronic device according to various embodiments of the disclosure, the communication processor may identify that another base station of another network has been searched in the process of searching for the base station before entering the mode, and search for the base station again on the basis of the signal having a frequency in the changed range in a state in which communication is performed by being connected to the other searched base station.

In the electronic device according to various embodiments of the disclosure, based on the reception of information related to the frequency band to be used for search of the base station from the network, the communication processor may search for the base station on the basis of the signal having the frequency band included in the information. The communication processor may identify whether the quality of the signal broadcast by the base station satisfies a designated condition on the basis of failure to search for the base station. Based on the quality of the signal broadcasted by the base station satisfying the designated condition, the communication processor may be configured to search for the base station again on the basis of a signal having a bandwidth larger than the range of the frequency band used for search of the base station.

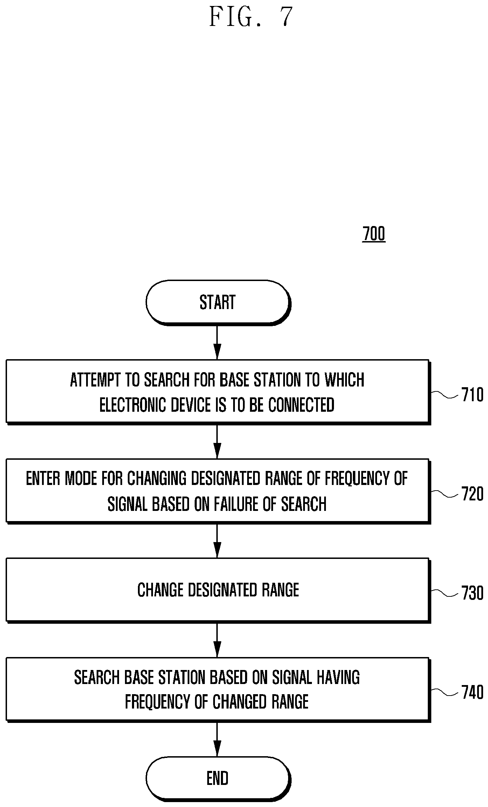

FIG. 7 is an operation flowchart illustrating a method for operating an electronic device according to various embodiments of the disclosure.

With reference to FIG. 7, an electronic device (e.g., electronic device 500 in FIG. 5) may attempt to search for a base station (e.g., base station 410 in FIG. 4A) to be connected to the electronic device 500 in operation 710.

The electronic device 500 may control a transceiver (e.g., transceiver 530 in FIG. 5) to search for the base station 410 included in a network (e.g., cellular network 400 in FIG. 4B) to which the electronic device 500 is to be connected. When searching for the base station 410, the electronic device 500 may control the transceiver 530 to activate automatic frequency control (AFC). AFC may refer to a function that changes the frequency (e.g., 2.6 GHz) of the signal to be generated by the transceiver 530 within a predesignated range (e.g., 5 ppm; 2.599974 GHz to 2.6000026 GHz).

In the operation of changing a signal broadcast by the base station 410 into a baseband signal through an antenna (e.g., antenna 460 in FIG. 4B), the electronic device 500 may identify the frequency of the signal broadcast by the base station 410 while changing the frequency of the reference signal to be used within a predesignated range. For example, the electronic device 500 changes the signal broadcast by the base station 410 into a baseband signal while changing the frequency of the reference signal within a designated range, and may determine the changed frequency as the frequency of the signal broadcast by the base station 410 in case that decoding is successful. Alternatively, when the electronic device 500 fails to decode the received signal or identify that the information obtained through decoding is not the information (e.g., MIB or SIB) required for connection with the base station 410, it may be determined that the search of the base station 410 has failed.

The failure in the search of the base station 410 may be caused by the aging of the DCXO 520 itself and/or an error in the temperature compensation function of the DCXO 520 performed by the communication processor 510. However, the disclosure is not limited thereto.

In operation 720, the electronic device 500 may enter a mode for changing the designated frequency range of the signal on the basis of a failure of the search of the base station 410.

The electronic device 500 may enter a mode for changing the designated range based on the identification that the search for the base station 410 has been attempted by changing the frequency of the reference signal within the designated range, but the search for the base station 410 has failed. Alternatively, the electronic device 500 may enter the mode for changing the designated range (or perform the operation to change the frequency of a reference signal within the designated range) based on the failure of search for the base station 410 through all cellular communications (e.g., NR, LTE, 3G, and/or 2G) supported by the electronic device 500.

The mode (or operation) for changing the designated range may mean the mode (or operation) for retrying the search of the base station 410 by changing the frequency of the reference signal within the changed (or increased) designated range. The reference signal is a reference signal generated using the reference clock generated by the DCXO 520 and may refer to a signal used to search for a signal broadcast by the base station 410.

The electronic device 500 may change the designated range in operation 730.

As the electronic device 500 enters the mode for changing the designated range, it may change the designated range configured in the AFC function. For example, the communication processor 510 may change the designated range to a range (e.g., 2.599961 GHz to 2.6000039 GHz, which is a 15 ppm range based on the reference frequency of 2.6 GHz) larger than a previously designated range (e.g., 2.599974 GHz to 2.6000026 GHz, which is a 5 ppm range based on the reference frequency of 2.6 GHz).

As part of the operation of determining the range to be changed, the electronic device 500 may determine the range to be changed on the basis of the number of times the mode for changing the designated range is entered (or the number of times the operation to change the designated range is performed).

The electronic device 500 may change the designated range so that the size of the changed range is different depending on the number of times the mode for changing the designated range is entered (or the number of times the operation to change the designated range is performed). The electronic device 500 may change the designated range so that as the number of times the mode for changing the designated range is entered increases, the size of the changed range increases. The increase in the number of times the mode for changing the designated range is entered means that the search of the base station 410 frequently fails, and the electronic device 500 may perform the search for the base station 410 by increasing the size of the range to be changed. In case that the number of times the mode is entered is greater than or equal to (or exceeding) a designated number of times, the electronic device 500 may configure the size of the changed range to the maximum value.

In case that the electronic device 500 succeeds in searching the base station 410, the electronic device 500 may store historical data including the reference frequency and frequency band used in the search of the base station 410 on a memory (e.g., memory 130 in FIG. 1). The electronic device 500 may use the historical data to determine the size of the changed range in the mode for changing the designated range. The electronic device 500 may compensate for the error of the DCXO 520 by configuring the frequency band of the reference signal to be used to search for the base station 410 to the designated range on the basis of the historical data.

When determining the designated range in the mode for changing the designated range, the electronic device 500 may select a frequency band from the historical data on the basis of the number of times the mode is entered and configure the selected frequency band to the designated range. As the number of time the mode is entered increases, the electronic device 500 may configure a relatively previously used frequency band to the designated range and search for the base station 410. According to an embodiment, in case that the electronic device 500 first enters the mode for changing the designated range, the electronic device 500 may configure the range of the frequency band used in the most recent successful search of the base station 410 to the designated range. In case that the electronic device 500 enters the mode for changing the designated range twice (or performs the operation to change the designated range twice), the electronic device 500 may configure the range of the second most recently used frequency band to the designated range.

In operation 740, the electronic device 500 may search for the base station 410 on the basis of a signal having a frequency in a changed range.

The electronic device 500 may search for the base station 410 again on the basis of the reference signal with the changed frequency range. According to an embodiment, assuming that the frequency of the signal broadcasted by the base station 410 is 2.6000030 GHz, the communication processor 510 may successfully search for the base station 410 on the basis of the reference signal having a frequency in the changed range (e.g., 2.599961 GHz to 2.6000039 GHz, which is a 15 ppm range based on the reference frequency of 2.6 GHz). The electronic device 500 may change the signal broadcast by the base station 410 to a baseband signal using a reference signal with a frequency within the changed range, and in case that decoding is successful, the electronic device 500 may determine that the search for the base station 410 is successful, and determine the changed frequency as the frequency of the signal broadcast by the base station 410. The electronic device 500 may change the signal transmitted by the base station 410 to a baseband signal on the basis of the reference signal having the changed frequency, and receive data by performing decoding.

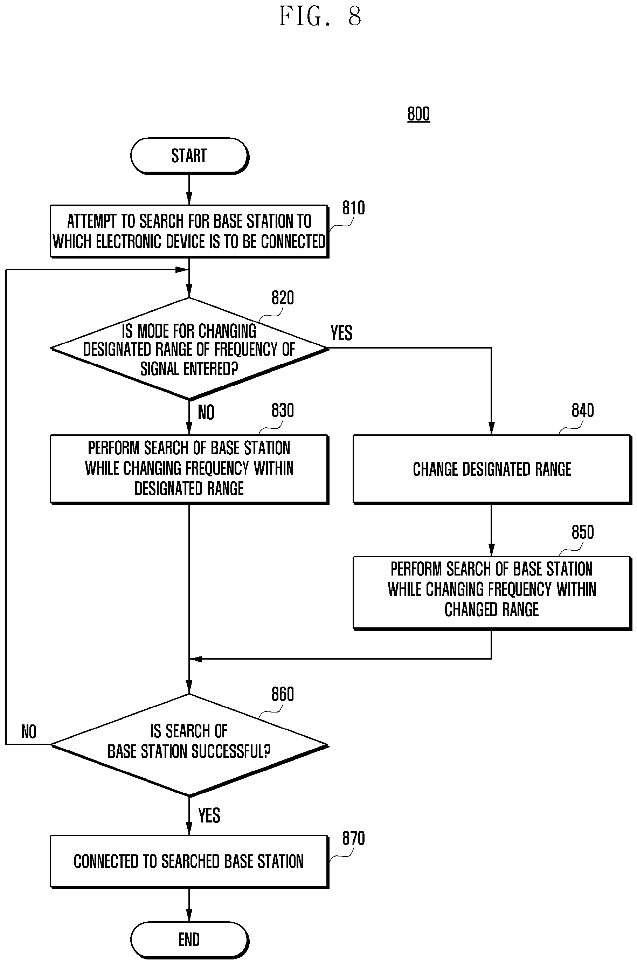

FIG. 8 is an operation flowchart illustrating a method for operating an electronic device according to various embodiments of the disclosure.

With reference to FIG. 8, an electronic device (e.g., electronic device 500 in FIG. 5) may attempt to search for a base station (e.g., base station 410 in FIG. 4A) to be connected to the electronic device 500 in operation 810.

The electronic device 500 may attempt to search for the base station 410 to access to a network (e.g., cellular network 400 in FIG. 4A) while not connected to the network 400.

In operation 820, the electronic device 500 may determine whether to enter a mode for changing a designated range of a frequency of a signal. The signal subject to change in the designated range is a signal used to search for a signal broadcast by the base station 410, and may refer to a reference signal generated on the basis of the reference clock generated by the DCXO 520.

The mode for changing the designated range may mean a mode in which the search for the base station 410 is attempted again by changing the frequency of the reference signal within the changed (or increased) designated range.

In response to not entering the mode for changing the designated range of frequency of the signal (operation 820-N), in operation 830, the electronic device 500 may perform the search for the base station 410 while changing the frequency of the reference signal within the designated range.

The electronic device 500 may control a transceiver (e.g., transceiver 530 in FIG. 5) to search for the base station 410 included in the network 400 to which the electronic device 500 is to be connected. When searching for the base station 410, the electronic device 500 may control the transceiver 530 to activate automatic frequency control (AFC). AFC may refer to a function that changes the frequency (e.g., 2.6 GHz) of the signal to be generated by the transceiver 530 within a predetermined range (e.g., 5 ppm; 2.599974 GHz to 2.6000026 GHz).

In the operation of changing a signal broadcast by the base station 410 into a baseband signal through an antenna (e.g., antenna 460 in FIG. 4B), the electronic device 500 may identify the frequency of the signal broadcast by the base station 410 while changing the frequency of the reference signal to be used within a predesignated range. For example, the electronic device 500 changes the signal broadcast by the base station 410 into a baseband signal while changing the frequency of the reference signal within a designated range, and may determine the changed frequency as the frequency of the signal broadcast by the base station 410 in case that decoding is successful. Alternatively, when the electronic device 500 fails to decode the received signal or identify that the information obtained through decoding is not the information (e.g., MIB or SIB) required for connection with the base station 410, it may be determined that the search of the base station 410 has failed.

In operation 840, the electronic device 500 may change the designated range in response to entering a mode for changing the designated range of the frequency of the reference signal (operation 820-y).

As the electronic device 500 enters the mode for changing the designated range, it may change the designated range configured in the AFC function. For example, the communication processor 510 may change the designated range to a range (e.g., 2.599961 GHz to 2.6000039 GHz, which is a 15 ppm range based on the reference frequency of 2.6 GHz) larger than a previously designated range (e.g., 2.599974 GHz to 2.6000026 GHz, which is a 5 ppm range based on the reference frequency of 2.6 GHz).

As part of the operation of determining the range to be changed, the electronic device 500 may determine the range to be changed on the basis of the number of times the mode for changing the designated range is entered.

The electronic device 500 may change the designated range so that the size of the changed range is different depending on the number of times the mode for changing the designated range is entered. The electronic device 500 may change the designated range so that as the number of times the mode for changing the designated range is entered increases, the size of the changed range increases. The increase in the number of times the mode for changing the designated range is entered means that the search of the base station 410 frequently fails, and the electronic device 500 may perform the search for the base station 410 by increasing the size of the range to be changed. In case that the number of times the mode is entered is greater than or equal to (or exceeding) a designated number of times, the electronic device 500 may configure the size of the changed range to the maximum value.

In case that the electronic device 500 succeeds in searching the base station 410, the electronic device 500 may store historical data including the reference frequency and frequency band used in the search of the base station 410 on a memory (e.g., memory 130 in FIG. 1). The electronic device 500 may use the historical data to determine the size of the changed range in the mode for changing the designated range. The electronic device 500 may compensate for the error of the DCXO 520 by configuring the frequency band of the reference signal to be used to search for the base station 410 to the designated range on the basis of the historical data.

When determining the designated range in the mode for changing the designated range, the electronic device 500 may select a frequency band from the historical data on the basis of the number of times the mode is entered and configure the selected frequency band to the designated range. As the number of time the mode is entered increases, the electronic device 500 may configure a relatively previously used frequency band to the designated range and search for the base station 410. According to an embodiment, in case that the electronic device 500 first enters the mode for changing the designated range, the electronic device 500 may configure the range of the frequency band used in the most recent successful search of the base station 410 to the designated range. In case that the electronic device 500 enters the mode for changing the designated range twice, the electronic device 500 may configure the range of the second most recently used frequency band to the designated range.

In operation 850, the electronic device 500 may search for the base station 410 on the basis of the signal having a frequency in the changed range.

The electronic device 500 may search for the base station 410 again on the basis of the reference signal with the changed frequency range. According to an embodiment, assuming that the frequency of the signal broadcasted by the base station 410 is 2.6000030 GHz, the communication processor 510 may attempt to search for the base station 410 on the basis of the reference signal having a frequency in the changed range (e.g., 2.599961 GHz to 2.6000039 GHz, which is a 15 ppm range based on the reference frequency of 2.6 GHz).

The electronic device 500 may determine whether the search for the base station 410 has succeeded in operation 860.

In case that the electronic device 500 changes the signal broadcast by the base station 410 to a baseband signal using a reference signal with a frequency within the changed range (or designated range) and decoding is successful, the electronic device 500 may determine that the search for the base station 410 has been successful and determine the changed frequency (or reference frequency) as the frequency of the signal broadcast by the base station 410.

In response to the failure of the search of the base station 410 (operation 860-N), the electronic device 500 may enter the mode for changing the designated range of the frequency of the signal (operation 820), further change the designated range, and attempt to search for the base station 410 again using the reference signal with a frequency within the changed range.

In operation 870, the electronic device 500 may connect to the searched base station 410 in response to the successful search of the base station 410 (operation 860-Y).

The electronic device 500 may receive data by changing the signal transmitted by the base station 410 into a baseband signal on the basis of the reference signal with the changed frequency and performing decoding.

The electronic device 500 may decode a SS/PBCH block from the signal transmitted by the base station 410 and synchronize with the base station 410 on the basis of the reference signal obtained through the decoding. The electronic device 500 may obtain a master information block (MIB) through a physical broadcast channel (PBCH) included in the SS/PBCH block. The electronic device 500 may obtain identification information (or physical identification information) of the base station 410, information related to a paging message, and/or the system frame number of the SS/PBCH block through the master information block.

The electronic device 500 may access the base station 410 on the basis of the obtained information and perform downlink synchronization with the base station 410. The electronic device 420 may perform random access to perform uplink synchronization with the base station 410, and as the random access procedure is completed, the electronic device 420 may perform a registration procedure in the cellular network 400. After registering with the cellular network 400, the electronic device 500 may transmit or receive data to/from the external electronic device 104.

A method for operating an electronic device according to various embodiments of the disclosure may comprise controlling a transceiver, which supports auto frequency control (AFC) performed to change a frequency of a signal within a designated range, to search for a base station included in a network to which an electronic device is to be connected by having the transceiver change the frequency of the signal within the designated range, in order to search for the base station included in the network to which the electronic device is to be connected; entering, on the basis of a failure of the search for the base station, a mode for changing the designated range; changing a size of the designated range; and searching for the base station again on the basis of a signal having a frequency of the changed range.

In the method for operating an electronic device according to various embodiments of the disclosure, the changing the size of the designated range may include changing the size of the designated range differently depending on a number of times the mode is entered.

In the method for operating an electronic device according to various embodiments of the disclosure, the changing the size of the designated range may include changing the size of the designated range so that as the number of times the mode is entered increases, the size of the designated range increases.

In the method for operating an electronic device according to various embodiments of the disclosure, the changing the size of the designated range may include changing the size of the changed range to a maximum value on the basis of the number of times the mode is entered being greater than or equal to a designated value.

In the method for operating an electronic device according to various embodiments of the disclosure, the entering the mode for changing the size of the designated range may include entering the mode in case that the search for the base station has failed through all wireless communications supported by the electronic device.

In the method for operating an electronic device according to various embodiments of the disclosure, the changing the size of the designated range may include selecting the designated range included in the historical data including the designated range used when successful accessing the network, on the basis of the number of times the mode is entered.

In the method for operating an electronic device according to various embodiments of the disclosure, the changing the size of the designated range may include selecting the designated range that has been used relatively earlier as the number of times the mode is entered increases; and changing to the selected range.

In the method for operating an electronic device according to various embodiments of the disclosure, the changing the size of the designated range may include increasing the designated range on the basis of the search for the base station in a network other than the network or failure to search for the base station in the network.

The method for operating an electronic device according to various embodiments of the disclosure may further comprise identifying that another base station of another network has been searched in a process of searching for the base station before entering the mode; and searching for the base station again on the basis of the signal having the frequency in the changed range in a state in which communication is performed by being connected to the other searched base station.

The method for operating an electronic device according to various embodiments of the disclosure may further comprise, based on the reception of information related to the frequency band to be used for search of the base station from the network, searching for the base station on the basis of the signal having the frequency band included in the information; identifying whether the quality of the signal broadcast by the base station satisfies a designated condition on the basis of failure to search for the base station; and based on the quality of the signal broadcasted by the base station satisfying the designated condition, searching for the base station again on the basis of a signal having a bandwidth larger than the range of the frequency band used for search of the base station.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a communication processor;
a digitally compensated crystal oscillator (DCXO) that generates a reference clock for generating a signal having a reference frequency; and
a transceiver that supports auto frequency control (AFC) performed to control the signal to have a frequency of designated range,
wherein the communication processor is configured to:
control the transceiver to search for a base station included in a network to which the electronic device is to be connected by changing the frequency of the signal within the designated range;
enter, on the basis of a failure of the search for the base station, a mode for changing the designated range;
change a size of the designated range; and
search for the base station again on the basis of a signal having a frequency of the changed range.

2. The electronic device of claim 1, wherein the communication processor is configured so that the size of the changed range varies depending on a number of times the mode is entered.

3. The electronic device of claim 2, wherein the communication processor is configured to increase the size of the designated range as the number of times the mode is entered increases.

4. The electronic device of claim 2, wherein the communication processor configures the size of the changed range to a maximum value on the basis of the number of times the mode is entered being greater than or equal to a designated value.

5. The electronic device of claim 1, wherein the communication processor enters the mode in case that the search for the base station has failed through all wireless communications supported by the electronic device.

6. The electronic device of claim 1, wherein the electronic device further comprises a memory that stores historical data including the designated range used when successful accessing the network stored in the memory,
the communication processor is configured to select the designated range included in the historical data on the basis of a number of times the mode is entered, and to search for the base station on the basis of the signal having the frequency in the selected designated range.

7. The electronic device of claim 6, wherein as the number of times the mode is entered increases, the electronic device is configured to search for the base station on the basis of the signal having the frequency in the designated range that has been used relatively earlier.

8. The electronic device of claim 1, wherein the communication processor is configured to increase the designated range on the basis of the search for the base station in a network other than the network or failure to search for the base station in the network.

9. The electronic device of claim 1, wherein the communication processor identifies that another base station of another network has been searched in a process of searching for the base station before entering the mode, and search for the base station again on the basis of the signal having the frequency in the changed range in a state in which communication is performed by being connected to the other searched base station.

10. The electronic device of claim 1, wherein based on a reception of information related to the frequency band to be used for search of the base station from the network, the communication processor searches for the base station on the basis of the signal having the frequency band included in the information,
the communication processor identifies whether a quality of the signal broadcast by the base station satisfies a designated condition on the basis of the failure to search for the base station,
based on the quality of the signal broadcasted by the base station satisfying the designated condition, the communication processor is configured to search for the base station again on the basis of the signal having a bandwidth larger than the range of the frequency band used for search of the base station.

11. A method for operating an electronic device, comprising:
controlling a transceiver, which supports auto frequency control (AFC) performed to change a frequency of a signal within a designated range, to search for a base station included in a network to which an electronic device is to be connected by having the transceiver change the frequency of the signal within the designated range, in order to search for the base station included in the network to which the electronic device is to be connected;
entering, on the basis of a failure of the search for the base station, a mode for changing the designated range;
changing a size of the designated range; and
searching for the base station again on the basis of a signal having a frequency of the changed range.

12. The method of claim 11, wherein the changing the size of the designated range comprises changing the size of the designated range differently depending on a number of times the mode is entered.

13. The method of claim 12, wherein the changing the size of the designated range comprises changing the size of the designated range so that as the number of times the mode is entered increases, the size of the designated range increases.

14. The method of claim 12, wherein the changing the size of the designated range comprises changing the size of the changed range to a maximum value on the basis of the number of times the mode is entered being greater than or equal to a designated value.

15. The method of claim 11, wherein the entering the mode for changing the size of the designated range comprises entering the mode in case that the search for the base station has failed through all wireless communications supported by the electronic device.
